# EUROPÄISCHE PATENTANMELDUNG

(11) **EP 2 103 338 A1**
(43) Veröffentlichungstag der Anmeldung: **23.09.2009**
(21) Anmeldenummer: 08167623.1
(22) Anmeldetag: 27.10.2008
(51) Int. Cl.: B01D 53/50, C04B 2/06

(54) **Rauchgasreinigungsverfahren und Kalkhydrat für Rauchgasreinigungsverfahren**

(30) Priorität: 19.03.2008 DE 102008014893
(71) Anmelder: Fels-Werke GmbH, 38640 Goslar (DE)
(72) Erfinder: Boenkendorf, Ulf Dr., 31188 Holle (DE); Stumpf, Thomas Dr., 38667 Bad Harzburg (DE)
(74) Vertreter: Solf, Alexander

(57) **Zusammenfassung**

Die Erfindung betrifft ein trockenes Rauchgasreinigungsverfahren, bei dem Kalkhydrat zum Abscheiden saurer Schadgase in einer Rauchgasreinigungsanlage mit Rauchgas gemischt wird, wobei als Kalkhydrat ein Kalkhydrat mit einer adsorbierten Feuchte von 3 bis 25 Gew.-%, insbesondere von 8 bis 25 Gew.-%, vorzugsweise von 12 bis 20 Gew.-%, und einer spezifischen Oberfläche nach BET zwischen 20 und 50 m²/g, vorzugsweise zwischen 28 und 40 m²/g, verwendet wird, dessen Fließfähigkeit, gemessen nach IMSE, zwischen 20 und 50 %, vorzugsweise zwischen 30 und 40 %, liegt.

## Beschreibung

Die vorliegende Erfindung betrifft ein trockenes Rauchgasreinigungsverfahren und ein Kalkhydrat dafür.

Bei industriellen Verbrennungsprozessen entstehende Abgase werden durch nachgeschaltete Vorrichtungen, wie z.B. Gewebe- oder Elektrofilter, Gaswäscheeinrichtungen beispielsweise mit einem Aktivkohlefilter und Entschwefelung gereinigt. Vor allem für Kraftwerke und Müllverbrennungsanlagen sind die in der 17. Verordnung zum Bundesimmissionsschutzgesetz (BImschV) festgelegten Grenzwerte im Rauchgas einzuhalten, so dass Rauchgasreinigungsanlagen, die der 17. BImschV nicht mehr genügen, z.B. durch Nachrüstung diesen neuen Anforderungen angepasst werden müssen.

Um so genannte saure Schadgase, d.h. Säure bildende Gase, wie vor allem SO₂ und HCl aus Rauchgas abzutrennen und zu binden, wird üblicherweise eine Reaktion mit einem Absorptionsmittel genutzt. Als Absorptionsmittel wird dabei typischerweise gebrannter Kalk oder ungebrannter Kalk eingesetzt. Der Kalk reagiert beispielsweise mit HCl zu Calciumchlorid oder mit SO₂ zu Calciumsulfat. Dieser REA-Gips (Rauchgasentschwefelungsanlagen-Gips) fällt dabei als vor allem in der Bautechnik eingesetzter Rohstoff in großen Mengen an.

Bei der technischen Umsetzung der Rauchgasreinigung mit nachgeschalteten Abscheideverfahren unterscheidet man zwischen nassen, trockenen und quasi-trockenen Rauchgasreinigungsverfahren.

Bei der Nassabsorption mit Kalk wird eine wässrige Suspension aus Kalksteinmehl oder Kalkhydrat in einen Rauchgasstrom eingedüst. Das im Rauchgasstrom enthaltene Schwefeldioxid wird zu Calciumsulfit umgesetzt, das durch anschließende Oxidation mit Luftsauerstoff in Calciumsulfat überführt wird. Das in suspendierter Form vorliegende Calciumsulfat-Dihydrat (Gips) muss durch mechanische Verfahren aus der wässrigen Phase abgeschieden und zur weiteren Verwendung beispielsweise als Bindemittel im Bauwesen calciniert werden. Dies bedeutet zusätzliche Verfahrensschritte und hohe Energiekosten.

Beim trockenen Verfahren wird als Sorbens typischerweise Kalkhydrat (gelöschter Kalk, Calciumhydroxid) verwendet, das pulverförmig dem Rauchgasstrom zugeführt, z.B. eingeblasen, wird. Das Kalkhydrat reagiert mit den sauren Schadgasbestandteilen wie beispielsweise SO₂ oder HCl. Die Reaktionsprodukte werden anschließend z.B. in einem Gewebefilter abgeschieden.

Beim quasi-trockenen Verfahren werden vor allem bei der SO₂-Absorption durch Erhöhung der relativen Rauchgasfeuchte hohe Abscheidegrade erzielt. Dies ist dadurch möglich, dass sich direkt um die Kalkhydratpartikel eine reaktive Zone mit einer sehr hohen relativen Feuchte von bis zu 100 % ausbildet, in der zunächst das SO₂-Gas, vor allem das Schwefeldioxid, gelöst wird, bevor es mit dem Kalkhydrat reagiert. Die Zuführung des für die Reaktion notwendigen Wassers erfolgt beim quasi-trockenen Verfahren durch die Zudosierung von z.B. Wasserdampf oder Wasser in das Rauchgas. Nachteilig ist, dass die zur Zudosierung notwendigen Vorrichtungen aufwändig zu installieren und zu warten sind und hohe Investitionskosten notwendig sind, so dass einfach konstruierte Rauchgasanlagen deswegen oft aus Kostengründen nicht zu quasi-trocken betriebenen umgerüstet werden können, obwohl dies zur Steigerung des Abscheidegrads vorteilhaft wäre.

Das Kalkhydrat wird durch Löschen von gebranntem Kalk hergestellt, wobei trocken gelöschte Kalkhydrate keinen oder einen nur geringen Überschuss von Wasser (bis zu 2 Gew.-%) gegenüber dem stöchiometrischen Verhältnis von trockenem Ca(OH)₂ enthalten.

Branntkalke werden grob in Weichbranntkalk und Hartbranntkalk unterteilt. Welche Art von Branntkalk erzeugt wird, lässt sich insbesondere durch die Brenntemperatur beeinflussen. Weichgebrannter Kalk entsteht bei Temperaturen von ca. 1000 °C, hartgebrannter Kalk bei ca. 1200°C. Zusätzlichen Einfluss haben auch die Brenndauer, Ofentyp und Brennstoff.

Weichbranntkalk hat relativ kleine CaO-Kristalle und eine hohe Porosität des gebrannten Kalkes, die im allgemeinen im Vergleich zu Hartbrannt eine höhere spezifische Oberfläche nach dem Ablöschen ergeben.

Hartbranntkalk hat gröbere CaO-Kristalle und eine geringe Porosität, was eine niedrigere spezifische Oberfläche nach dem Ablöschen ergibt.

Eine genormte Methode zur Charakterisierung der Reaktivität eines Branntkalks besteht in der Ermittlung einer Nasslöschkurve (NLK) entsprechend DIN EN 459-2, mit der seine Temperaturerhöhung bei der Reaktion mit Wasser in Abhängigkeit von der Reaktionsdauer festgestellt wird. Charakteristische Werte einer Nasslöschkurve sind der tᵤ-Wert und der t₆₀-Wert. Der tᵤ-Wert ist die Zeit in Minuten, die für einen 80-%igen Umsatz des löschbaren Kalks zu Kalkhydrat erforderlich ist. Dabei wird die Temperatur Tᵤ erreicht. Der t₆₀-Wert ist die Zeitdauer in Minuten, die bis zum Erreichen einer Temperatur von 60°C beim Löschvorgang nötig ist.

Ob ein Weich- oder Hartbranntkalk vorliegt, lässt sich z.B. anhand der Reaktionsgeschwindigkeit des Löschprozesses von Kalk mit Wasser bestimmen. Bei einer Reaktionsdauer t₆₀ von unter drei Minuten liegt ein Weichbranntkalk vor, bei einer Reaktionsdauer t₆₀ von über acht Minuten Hartbranntkalk. Kalke mit dazwischen liegenden Reaktionsdauern werden als Mittelbranntkalke angesprochen. Die unterschiedlichen Reaktionsgeschwindigkeiten ergeben sich aus den beim Brennen mit unterschiedlichen Temperaturen und Dauern resultierenden Korngrößen und Porengrößen, sowie spezifischen Oberflächen.

Kalkhydrate, die bei der trockenen Rauchgasreinigung eingesetzt werden, müssen neben einem hohen Anteil an Ca(OH)₂ (mindestens 90 Gew.-%) auch eine hohe spezifische Oberfläche aufweisen, um einen hohen Abscheidegrad zu erzielen. Diese liegt als spezifische Oberfläche nach BET gemessen bevorzugt bei 18 - 20 m²/g. Die DE 69 603 874 T2 offenbart Kalkhydrat mit spezifischen Oberflächen von größer als 30 m²/g.

In der Patentschrift DE 69 603 874 T2 wird ein spezielles Kalkhydrat zur trockenen Rauchgasreinigung beschrieben. Dieses Kalkhydrat ist durch feuchtes Löschen von gebranntem Kalk mit einem Wasserüberschuss von 15 bis 25 % und einen anschließenden aufwändigen Trockenschritt zur Herstellung eines Kalkhydrats mit einer Feuchte von unter 2 Gew.-% erzeugt. Der Trockenschritt soll eine spezielle Porenstruktur des Kalkhydrats mit einem Porenvolumen der Stickstoffdesorption, das durch Poren mit einem Durchmesser zwischen 100 und 400 Å definiert ist, oberhalb von 0,1 cm³/g bewirken. Diese soll eine gesteigerte Absorption von Schwefeldioxid und HCl bewirken.

Aufgabe der vorliegenden Erfindung ist, ein preisgünstiges Rauchgasreinigungsverfahren mit einem hohen Abscheidegrad insbesondere für SOₓ, sowie ein Kalkhydrat dafür bereitzustellen.

Diese Aufgabe wird durch die Merkmale der Ansprüche 1, 3, 6, 15 und 20 gelöst. Erfindungsgemäß wird bei einem trockenen Rauchgasreinigungsverfahren als Kalkhydrat zum Abscheiden saurer Schadgase im Rauchgas ein Kalkhydrat mit einer adsorbierten Feuchte von 3 bis 25 Gew.-%, insbesondere von 8 bis 25 Gew.-%, insbesondere von 12 bis 20 Gew.-%, und einer spezifischen Oberfläche zwischen 20 und 50 m²/g, insbesondere zwischen 28 und 40 m²/g verwendet, dessen Fließfähigkeit (bestimmt nach Prüfverfahren des Bundesverbandes der Deutschen Kalkindustrie EV: "Prüfung des Fließverhaltens feinteiliger Schüttgüter nach IMSE August 2002) auf Werte zwischen 20 und 50 %, insbesondere zwischen 30 und 40 % eingestellt ist. Vorteilhafte Ausgestaltungen und Weiterbildungen sind in den Unteransprüchen definiert.

Das für das erfindungsgemäße Rauchgasreinigungsverfahren eingesetzte erfindungsgemäße Kalkhydrat wird mit einem freien Wassergehalt von 4 bis 25 Gew.-%, insbesondere von 8 bis 25 Gew.-% hergestellt. Dieser freie Wassergehalt ist überschüssiges Wasser, das über die zum Erzielen von stöchiometrischem Ca(OH)₂ notwendige Wassermenge hinausgeht, und steht für chemische Reaktionen, wie eine Säurebildung mit SO₂ zu schwefliger Säure, zur Verfügung. Der freie Wassergehalt wird im Folgenden der Einfachheit halber als "Feuchte" oder "adsorbierte Feuchte" bezeichnet.

Die Feuchte bewirkt möglicherweise wie beim quasi-trockenen Verfahren offenbar eine reaktive Zone um die Kalkhydratpartikel, die eine Reaktivität von sauren Schadgasen, insbesondere von SO₂, mit dem Kalkhydrat, durch ein Lösen der Gase im überschüssigen Wasser (d.h. in der Feuchte) erhöht.

Für die Durchführung des erfindungsgemäßen Verfahrens ist lediglich ein einfacher Aufbau einer Rauchgasreinigungsanlage wie beim herkömmlichen trockenen Rauchgasreinigungsverfahren erforderlich, wobei statt des trockenen Kalkhydrats ein feuchtes Kalkhydrat mit den gezielt eingestellten Merkmalen der Feuchte, Fließfähigkeit und spezifischen Oberfläche verwendet wird. Durch Auswahl dieser Parameterfenster ergibt sich ein Kalkhydrat, das trotz seiner Feuchte in nach dem trockenen Verfahren arbeitenden Rauchgasreinigungsanlagen mit sehr hohen Abscheideraten für SO₂ und HCl eingesetzt werden kann. Feucht gelöschte Kalkhydrate mit einem freien Wasserüberschuss gegenüber dem zur Erzielung von Ca(OH)₂ notwendigen, chemisch gebundenen Wassergehalt bilden grobe Agglomerate und sind deshalb nur schwer handhabbar.

Der Abscheidegrad des erfindungsgemäßen feuchten Kalkhydrats ist gegenüber trockenem Kalkhydrat, das durch trockenes Löschen (d.h. Löschen mit einer Wassermenge, die zum Erzielen von stöchiometrischem Ca(OH)₂ ohne überschüssiges, nicht chemisch gebundenes Wasser nötig ist) hergestellt ist, überraschend hoch.

Dies ist in der hohen spezifischen Oberfläche des Kalkhydrats begründet, die durch das feuchte Löschen des Kalks im Vergleich zu einem trocken gelöschten Kalkhydrat erheblich erhöht wird. Die hohe spezifische Oberfläche bewirkt in Kombination mit dem überschüssigen Wasser einen besonders hohen Abscheidegrad von sauren Schadgasen, insbesondere von SO₂.

Die sich beim feuchten Löschen des Kalks ergebenden Kalkhydratpartikel mit einer gezielt eingestellten hohen Oberfläche und der relativ hohen Feuchte agglomerieren. In überraschender Weise gelingt es, diese Agglomerate durch Zusatz eines Fließmittels aufzulösen und gleichzeitig ein sehr gut fließfähiges Kalkhydrat zu schaffen. Hinzu kommt, dass das Fließmittel sogar den Abscheidegrad erhöht. Die erfindungsgemäßen Kalkhydrate können problemlos mit üblichen Fördermitteln, mit denen auch trockene Kalkhydrate gefördert werden, gefördert werden.

Beim Eindüsen in einen Rauchgasstrom bleiben die Kalkhydratpartikel vereinzelt, so dass die gesamte wirksame Oberfläche der Partikel für das reagierende Rauchgas weitestgehend zugänglich ist. Die hohe, gezielt hergestellte oder insbesondere mit dem Fließmittel eingestellte Fließfähigkeit der Kalkhydratpartikel ermöglicht somit im Zusammenspiel mit der eingestellten Feuchte und der spezifischen Oberfläche in überraschender Weise die hohen Abscheidegrade.

In einer ersten Ausführungsform der Erfindung ist das erfindungsgemäß eingesetzte Kalkhydrat ein Kalkhydrat, das durch Löschen von Hartbranntkalk hergestellt ist, im Folgenden auch Hartbranntkalkhydrat genannt. Seine gröberen Kalkhydratpartikel agglomerieren weniger als Weichbranntkalkhydratpartikel. Somit wird erfindungsgemäß gezielt die Fließfähigkeit gesteuert über ein Temperatur-Zeit-Profil beim Brennen des Kalkes zu einem Hartbranntkalk, aus dem sich durch feuchtes Löschen mit den ausgewählten Wasserüberschüssen ein erfindungsgemäß einsetzbares Kalkhydrat ergibt, dessen Fließfähigkeit in dem Bereich zwischen 20 und 40 %, insbesondere zwischen 30 und 40 %, liegt und das sich trotz seiner Feuchte in trockenen Rauchgasreinigungsanlagen verwenden lässt. Das Kalkhydrat lässt sich problemlos fördern, dosieren und in einen Rauchgasstrom eindüsen. Da trotz der Feuchte des Kalkhydrats kein Agglomerieren der Kalkhydratpartikel auftritt, verteilen sich die Partikel während des Einblasens homogen im Rauchgasstrom.

Bevorzugt enthält das Kalkhydrat über 90 Gew.-% Ca(OH)₂, vorzugsweise über 92 Gew.-% Ca(OH)₂.

Nach einer weiteren Ausführungsform der Erfindung wird die Fließfähigkeit von Hartbranntkalkhydraten - sofern erforderlich - und Weichbranntkalkhydraten gezielt durch das Mischen mit einem Fließmittel zur Einstellung der Fließfähigkeit gewährleistet. Ein bevorzugtes Fließmittel ist Siliconöl, bevorzugt in einer Dosierung von 0,2 bis 1, vorzugsweise von 0,4 bis 0,7 Gew.-%, bezogen auf den feuchten Kalkhydratanteil.

Das Additiv vermindert in überraschender Weise nicht die reaktionsfördernde Wirkung des adsorbierten Wassers. Man würde normalerweise eine negative Beeinflussung der Schadstoffabsorption durch das Additiv erwarten. Zudem findet auch nicht eine zu erwartende Beeinträchtigung der Poren oder Abschirmung der Oberfläche der Partikel durch das Additiv statt.

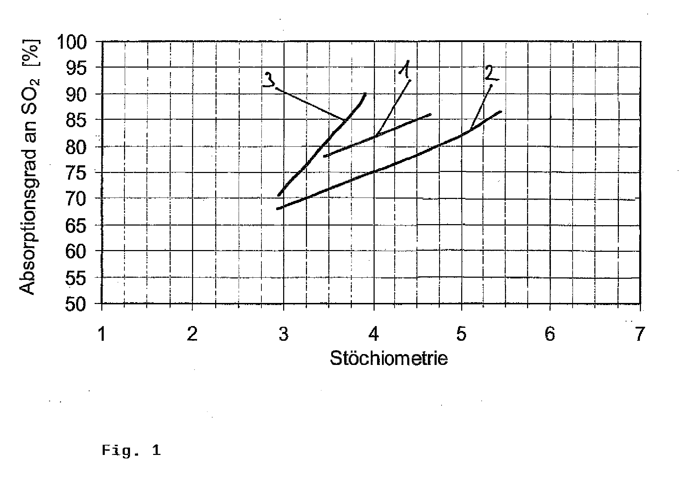

Die einzige Figur 1 zeigt die Abscheideleistung von SO₂ aus Sorptionsversuchen, wobei auf der Abszisse der Absorptionsgrad an SO₂, auf der Ordinate die Stöchiometrie aufgetragen ist. Dargestellt sind die Messkurven eines erfindungsgemäßen feuchten Kalkhydrats (Feuchte: 14 Gew.-%) (Kurve 1) im Vergleich zu herkömmlichem trockenem Kalkhydrat (Feuchte: 1,2 Gew.-%) (Kurve 2) und zu trockenem Kalkhydrat gemäß der DE 69 603 874 T2 (Feuchte: 1,5 Gew.-%) (Kurve 3).

Die Angabe der Stöchiometrie bedeutet einen Faktor, um den die Kalkhydratmenge gegenüber der zur Reaktion mit Schwefeldioxid zu Calciumsulfit stöchiometrisch notwendigen Menge im Überschuss erhöht eingesetzt wird. Entsprechend bedeutet beispielsweise eine Stöchiometrie von zwei die doppelte Menge an Kalkhydrat gegenüber der theoretisch zur vollständigen Umsetzung benötigten Menge.

Man erkennt aus der Figur 1, dass die notwendige Menge an erfindungsgemäßem Kalkhydrat (Kurve 1) bei gleichem Abscheidegrad von SO₂ gegenüber herkömmlichem, trocken gelöschtem Kalk (Kurve 2) deutlich verringert ist.

Anders ausgedrückt wird unter Einsatz einer gewissen Stöchiometrie mit dem erfindungsgemäßen Sorbens ein deutlich höherer Abscheidegrad erzielt als mit herkömmlichem, trocken gelöschtem Kalk.

Die mit der erfindungsgemäßen Verwendung von feuchtem Kalkhydrat erzielten Abscheidegrade liegen zwar niedriger als bei der Verwendung des Kalkhydrats gemäß der DE 69 603 874 T2 (Kurve 3), bzw. zum Erzielen gleicher Abscheidegrade ist eine höhere Stöchiometrie nötig; das Kalkhydrat gemäß der DE 69 603 874 T2 ist jedoch wie beschrieben nur mit einem sehr aufwändigen und teuren, weil viel Energie benötigenden, Verfahren herstellbar.

Mit dem erfindungsgemäßen Kalkhydrat wird dagegen ein technisch unkompliziertes Herstellungsverfahren genutzt, um ein hochreaktives Kalkhydrat für trockene Rauchgasreinigungsanlagen sehr preisgünstig herzustellen. Ebenso ist ein Rauchgasreinigungsverfahren mit dem erfindungsgemäßen Kalkhydrat unkompliziert und preisgünstig mit den gleichen Anlagen wie für ein herkömmliches trockenes Rauchgasreinigungsverfahren durchzuführen, jedoch mit erhöhten Abscheidegraden.

Nach einer besonderen Ausführungsform der Erfindung wird ein neues Produkt, nämlich ein körniges rieselfähiges durch Kompaktierung und anschließendes Zerkleinern bzw. Brechen erzeugtes Kalkhydratgranulat aus feinteiligem abgelöschtem Kalkhydrat hergestellt und zur Rauchgasreinigung verwendet. Das körnige Kalkhydrat ist ein Granulat, das bei seiner Verwendung hauptsächlich Korngrößen zwischen 0,05 und 1,0 mm, insbesondere zwischen 0,1 und 0,8 mm aufweist.

Ferner unterscheidet sich das neue körnige rieselfähige Kalkhydratgranulat deutlich hinsichtlich des Schüttgewichts vom pulverförmigen bzw. feinteiligen abgelöschten Kalkhydrat. Erfindungsgemäß wird körniges rieselfähiges Kalkhydratgranulat mit einem Schüttgewicht von 500 bis 1200, insbesondere 600 bis 900 kg/m³ hergestellt. Pulvriges Kalkhydrat ohne Feuchte, z.B. gemäß DE 69 603 874 T2, hat in der Regel z.B. ein Schüttgewicht zwischen 300 und 500 kg/m³.

Vorteilhaft ist, wenn kein beim Brechen entstandenes Feinkorn < 100 µm vorhanden ist. Andererseits kann aber auch je nach Feuchtegehalt des Kalkhydrats bis zu 30 Gew.-%, insbesondere bis zu 10 Gew.-% Feinkornanteil < 100 µm und/oder feinteiliges Ausgangskalkhydrat enthalten sein.

Vorzugsweise werden Kornfraktionen mit Kornbändern von z.B. 0,1 bis 0,8 mm oder 0,1 bis 0,4 mm oder 0,4 bis 0,8 mm hergestellt und verwendet, wobei auch eine Einkornfraktion mit einer bestimmten Korngröße herstellbar ist und bevorzugt verwendet wird.

Insbesondere wird das körnige Kalkhydrat aus einem Kalkhydrat hergestellt, das die Merkmale des Anspruchs 1 aufweist oder eine Fließfähigkeit < 20 % hat, wobei letzteres bevorzugt wird, weil kein Fließmittel eingesetzt werden muss.

Die erfindungsgemäßen Kalkhydrat-Granulate können nach verschiedenen bekannten Kompaktierverfahren hergestellt werden. Beispielsweise können mit an sich bekannten Walzenpressvorrichtungen Presslinge wie Kissen oder Briketts z.B. Mandelbriketts mit z.B. folgenden Abmessungen in mm durch Kompaktierung erzeugt werden:

| Breite | Dicke | Länge |
|---|---|---|
| 5 bis 55 | 3 bis 35 | 8 bis 65 |
| insbesondere | insbesondere | insbesondere |
| 25 bis 35 | 15 bis 25 | 30 bis 45 |

Diese Presslinge sind Zwischenprodukte, die an Betreiber einer Rauchgasreinigungsanlage geliefert werden können. In der Regel werden diese Presslinge aber in an sich bekannter Weise in Brechanlagen gebrochen und anschließend zur Herstellung der gewünschten Kornfraktionen entsprechend gesiebt. Das Brechen erfolgt zweckmäßigerweise unmittelbar nach dem Pressen, kann aber auch z.B. beim Betreiber einer Rauchgasreinigungsanlage erfolgen.

Eine weitere Herstellungsmethode ist das an sich bekannte Tablettenpressen mit Lochmatrizen und anschließendem Brechen der Tabletten und Siebung des gebrochenen Gutes.

Beschrieben werden diese an sich bekannten Kompaktierverfahren z.B. in der DE 196 00 615 A1, deren Offenbarungsgehalt hiermit im Rahmen der Beschreibung der vorliegenden Erfindung als integriert gelten soll.

In der DE 196 00 615 A1 wird aber noch ein weiteres Kompaktierverfahren beschrieben, das im Rahmen der vorliegenden Erfindung bevorzugt angewendet wird. Es handelt sich um Kompaktiervorrichtungen zur Trockengranulierung, die mit Walzenpressen und einer nachgeschalteten Zerkleinerungsvorrichtung arbeiten. Mit den Walzenpressen werden sogenannte Schülpen erzeugt; das sind Feststoffplatten, deren Dicke gering im Vergleich zu ihrer Längs- und Querabmessung ist. Aus diesen Schülpen bzw. flächigen Presslingen werden mittels Brechanlagen Granulate erzeugt. Kompaktiervorrichtungen dieser Art ermöglichen einen relativ hohen Durchsatz.

Die Brechvorrichtungen erzeugen zwar neben dem Grobkornanteil einen Feingutanteil, der z.B. der Walzenpresse wieder zugeführt werden kann. In untergeordneten Teilmengen von z.B. 30 Gew.-% kann aber auch ein Feingutanteil im erfindungsgemäßen Granulat verbleiben.

Erfindungsgemäß werden Schülpen z.B. mit einer Dicke zwischen 0,5 und 12 mm, vorzugsweise zwischen 1 und 8 mm bei unterschiedlicher Länge erzeugt. Diese Schülpen werden gebrochen z.B. bis zur Maximalkorngröße von 2 mm, insbesondere von 1 mm. Anschließend wird durch Siebung klassiert und Kornfraktionen z.B. zwischen 0,1 und 0,4 mm oder zwischen 0,4 und 0,8 mm abgesiebt. Feinstgut < 0,1 mm wird wie oben beschrieben verarbeitet.

Geeignete Kompaktiervorrichtungen zur Trockengranulierung, die mit Walzenpressen arbeiten, und die das nach einem Ablöschvorgang aus Branntkalk sehr feinteilig bzw. pulvrig anfallende Kalkhydrat zu Presslingen bzw. zu Schülpen entlüften und verdichten, werden z. B. von der Firma powtec, Maschinen und Engineering GmbH, D-42859 Remscheid, in deren Prospekten beschrieben. Diese Vorrichtungen können eine Rohrsiebmühle und eine integrierte Siebvorrichtung mit einer Unterkornrückführungsvorrichtung aufweisen.

Neben den beschriebenen Verfahren zur Herstellung der Hydratgranulate ist auch die Aufbauagglomeration über beispielsweise das Gutbettverfahren ("Pelletieren") möglich.

Überraschend ist, dass die Abscheideleistung der erfindungsgemäßen Granulate in einer Rauchgasreinigungsanlage trotz der Kompaktierung zumindest so gut ist wie die Abscheideleistung der pulverförmigen Kalkhydrate. Diese Abscheideleistung war nicht zu erwarten, weil bekannt ist, dass kompaktierte Granulate den Zugang der Gase zu den Kalkhydratpartikeln in den Granulatkörnern behindern. In überraschender Weise zerfallen die Granulatkörner aufgrund der hohen Temperaturen bei der Rauchgasreinigung und wohl auch durch die mechanische Beanspruchung während der Rauchgasreinigung, so dass nahezu wieder eine Pulverform entsteht. Das Zerfallen der Granulatkörner ist möglicherweise darauf zurückzuführen, dass eine plötzliche Verdampfung des in den Körnern vorhandenen Wassers erfolgt, so dass die Körner gesprengt werden.

## Patentansprüche

1. Trockenes Rauchgasreinigungsverfahren, bei dem Kalkhydrat zum Abscheiden saurer Schadgase in einer Rauchgasreinigungsanlage mit Rauchgas gemischt wird, **dadurch gekennzeichnet, dass** als Kalkhydrat ein Kalkhydrat mit einer adsorbierten Feuchte von 3 bis 25 Gew.-%, insbesondere von 8 bis 25 Gew.-%, vorzugsweise von 12 bis 20 Gew.-%, und einer spezifischen Oberfläche nach BET zwischen 20 und 50 m²/g, vorzugsweise zwischen 28 und 40 m²/g, verwendet wird, dessen Fließfähigkeit, gemessen nach IMSE, zwischen 20 und 50 %, vorzugsweise zwischen 30 und 40 %, liegt.

2. Rauchgasreinigungsverfahren nach Anspruch 1, **dadurch gekennzeichnet, dass** ein Kalkhydrat verwendet wird, dem ein Additiv, insbesondere in Form eines Siliconöls zur Einstellung der Fließfähigkeit, insbesondere in Mengen von 0,2 bis 1,0 Gew.-%, vorzugsweise in Mengen von 0,4 bis 0,7 Gew.-%, bezogen auf das feuchte Kalkhydrat, zugegeben ist.

3. Kalkhydrat zum Abscheiden saurer Schadgase in einer Rauchgasreinigungsanlage, **dadurch gekennzeichnet, dass** es eine adsorbierte Feuchte von 4 bis 25 Gew.-%, insbesondere von 8 bis 25 Gew.-%, vorzugsweise von 12 bis 20 Gew.-%, eine spezifische Oberfläche nach BET zwischen 20 und 50 m²/g, vorzugsweise zwischen 28 und 40 m²/g, und eine Fließfähigkeit, gemessen nach IMSE, zwischen 20 und 50 %, insbesondere zwischen 30 und 40 %, aufweist.

4. Kalkhydrat nach Anspruch 3, **dadurch gekennzeichnet, dass** es ein Additiv zur Einstellung der Fließfähigkeit, insbesondere in Form von Siliconöl, insbesondere in Mengen von 0,2 bis 1,0 Gew.-%, vorzugsweise in Mengen von 0,4 bis 0,7 Gew.-%, bezogen auf das feuchte Kalkhydrat, enthält.

5. Kalkhydrat nach einem oder mehreren der Ansprüche 3 oder 4, **dadurch gekennzeichnet, dass** es ein pulverförmiges Kalkhydrat mit einem Schüttgewicht von 400 bis 800 kg/m³, insbesondere zwischen 500 und 600 kg/m³, ist.

6. Kalkhydrat zum Abscheiden saurer Schadgase in einer Rauchgasreinigungsanlage, **dadurch gekennzeichnet, dass** es ein durch Kompaktieren und Zerkleinern erzeugtes Kalkhydratgranulat mit einer Korngröße > 0,1 mm ist.

7. Kalkhydrat nach Anspruch 6, **dadurch gekennzeichnet, dass** das Granulat eine spezifische Oberfläche nach BET zwischen 20 und 50 m²/g, insbesondere zwischen 28 und 40 m²/g, aufweist.

8. Kalkhydrat nach Anspruch 6 und/oder 7, **dadurch gekennzeichnet, dass** das Granulat eine adsorbierte Feuchte von 4 bis 25 Gew.-%, insbesondere von 8 bis 25 Gew.-%, vorzugsweise von 12 bis 20 Gew.-% aufweist.

9. Kalkhydrat nach einem oder mehreren der Ansprüche 6 bis 8, **dadurch gekennzeichnet, dass** das Granulat ein Additiv zur Einstellung der Fließfähigkeit, insbesondere in Form von Siliconöl, insbesondere in Mengen von 0,2 bis 1,0 Gew.-%, vorzugsweise in Mengen von 0,4 bis 0,7 Gew.-%, bezogen auf das feuchte Kalkhydrat, enthält.

10. Kalkhydrat nach einem oder mehreren der Ansprüche 6 bis 9, **dadurch gekennzeichnet, dass** das Granulat ein Granulat mit Korngrößen von 0,05 bis 1,0 mm, insbesondere von 0,1 bis 0,8 mm ist.

11. Kalkhydrat nach einem oder mehreren der Ansprüche 6 bis 10, **dadurch gekennzeichnet, dass** das Granulat ein Schüttgewicht zwischen 500 und 1200 kg/m³, insbesondere zwischen 600 und 900 kg/m³ aufweist.

12. Kalkhydrat nach einem oder mehreren der Ansprüche 6 bis 11, **dadurch gekennzeichnet, dass** es neben dem Granulat je nach Feuchtegehalt bis zu 30 Gew.-%, insbesondere bis zu 10 Gew.-%, aus der Zerkleinerung resultierenden Feinkornanteil < 100 µm und/oder feinteiliges abgelöschtes Kalkhydrat enthält.

13. Kalkhydrat nach einem oder mehreren der Ansprüche 6 bis 12, **dadurch gekennzeichnet, dass** das Granulat aus einer Kornfraktion mit einem Kornband von 0,05 bis 1,0 mm, insbesondere von 0,1 bis 0,8 mm, vorzugsweise von 0,1 bis 0,4 mm besteht.

14. Kalkhydrat nach Anspruch 13, **dadurch gekennzeichnet, dass** das Granulat aus einer Einkornfraktion mit einer Korngrößenabweichung von max. +/- 0,2 mm besteht.

15. Verfahren zur Herstellung eines Kalkhydratgranulats nach einem oder mehreren der Ansprüche 6 bis 14, **dadurch gekennzeichnet, dass** feinteiliges abgelöschtes Kalkhydrat durch Pressen zu Presslingen kompaktiert, die Presslinge zu Granulat zerkleinert bzw. gebrochen und anschließend zur Herstellung der gewünschten Kornfraktionen entsprechend gesiebt wird.

16. Verfahren nach Anspruch 15, **dadurch gekennzeichnet, dass** eine Walzenpresse verwendet wird und als Presslinge Kissen oder Briketts, insbesondere Mandelbriketts, hergestellt werden mit folgenden Abmessungen:
| | | |
|---|---|---|
| Breite | 5 bis 55 mm, | insbesondere 25 bis 35 mm |
| Dicke | 3 bis 35 mm, | insbesondere 15 bis 25 mm |
| Länge | 8 bis 65 mm, | insbesondere 30 bis 45 mm |
und vorzugsweise die Presslinge in Brechanlagen gebrochen und anschließend zur Herstellung der gewünschten Kornfraktionen entsprechend gesiebt werden.

17. Verfahren nach Anspruch 15, **dadurch gekennzeichnet, dass** zur Kompaktierung Tablettenpressen verwendet und Tabletten erzeugt werden und vorzugsweise die Tabletten in Brechanlagen gebrochen und anschließend zur Herstellung der gewünschten Kornfraktionen entsprechend gesiebt werden.

18. Verfahren nach Anspruch 15, **dadurch gekennzeichnet, dass** eine Walzenpresse verwendet wird und als Presslinge Schülpen erzeugt werden, vorzugsweise mit folgenden Abmessungen hergestellt werden: Dicke 0,5 bis 12 mm, insbesondere 1 bis 8 mm, wobei vorzugsweise die Schülpen bis zur Maximalkorngröße von 2, insbesondere 1 mm gebrochen werden.

19. Verfahren nach Anspruch 18, **dadurch gekennzeichnet, dass** das gebrochene Gut durch eine Siebung klassiert und Kornfraktionen zwischen 0,1 und 0,4 mm oder zwischen 0,4 und 0,8 mm abgesiebt werden.

20. Trockenes Rauchgasreinigungsverfahren, **dadurch gekennzeichnet dass,** ein Kalkhydratgranulat nach einem oder mehreren der Ansprüche 6 bis 14, hergestellt nach einem oder mehreren der Ansprüchen 15 bis 19, zum Abscheiden saurer Schadgase in einer Rauchgasreinigungsanlage verwendet wird.
